Europäisches Patentamt

European Patent Office

Office européen des brevets

(11) Publication number: **0 667 228 A1**

(19)

(12) **EUROPEAN PATENT APPLICATION**
published in accordance with Art.
158(3) EPC

(21) Application number: **92920996.3**

(22) Date of filing: **01.10.92**

(86) International application number:
**PCT/JP92/01270**

(87) International publication number:
**WO 93/08977 (13.05.93 93/12)**

(51) Int. Cl.⁶: **B29C 67/14**, E04C 5/07,
E04C 5/12, //B29K105:10

(30) Priority: **31.10.91 JP 311376/91**

(43) Date of publication of application:
**16.08.95 Bulletin 95/33**

(84) Designated Contracting States:
**DE FR SE**

(71) Applicant: **KOMATSU PLASTICS INDUSTRY CO., Ltd.**
**1-6-3, Ohashi,**
**Meguro-ku**
**Tokyo 153 (JP)**
Applicant: **KABUSHIKI KAISHA KOMATSU**
**SEISAKUSHO**
**3-6, Akasaka 2-chome, Minato-ku**
**Tokyo 107 (JP)**

(72) Inventor: **OZAWA, Nobuyuki**
**1325-47, Koorimoto**
**Ichibara-shi**
**Chiba 290 (JP)**

(74) Representative: **TER MEER - MÜLLER -**
**STEINMEISTER & PARTNER**
**Mauerkircherstrasse 45**
**D-81679 München (DE)**

(54) **METHOD AND DEVICE FOR MOLDING SPIRALLY GROOVED FRP PRODUCT.**

(57) A method and a device for the continuous draw-molding of a spirally grooved FRP product, which enables grooves to be formed without cutting FRP fibers when intending to mold a spirally grooved FRP product and serves to improve quality thereof while preventing decrease in tensile strength of the grooved FRP molded product. Band-like material (10) is wound in a crosswise spiral pattern around the outer periphery of FRP material before hardened, pressed toward the center of the FRP material, and removed from the FRP that has been hardened, whereby crosswise spiral grooves are formed on the FRP molded product. The process is applied to molding of an FRP product with spiral grooves appropriate for reinforcing the concrete structure.

EP 0 667 228 A1

# FIG. 2

## FIELD OF THE INVENTION

The present invention relates to a process and an apparatus for forming a FRP formed product in a configuration of bar-shape, tube-shape or so forth, on the outer periphery of which a spiral groove is formed.

## BACKGROUND ART

As is well known in the art, FRP formed products have a excellent physical and chemical properties, such as a high tensile resistance, high bending elastic modules, and have excellent corrosion resistance and have been employed as various corrosion resistive constructional members. The process of fabrication of such FRP formed products, comprises a steps, in which a resin is impregnated in a glass fiber base material, the glass fiber base material is introduced into a mold for thermal setting within the mold, and the cured formed product is withdrawn therefrom.

For excellent corrosion resistance, such FRP formed product can be applied as a reinforcement or so forth of a concrete construction, as disclosed in Japanese Unexamined Patent Publication No. 3-202539. In such case, one or more grooves have to be formed on the outer periphery of the FRP formed product so as to obtain sufficient bonding strength. As a process for forming the grooves on the outer circumference in order to provide necessary bonding strength therewith, it has been typical process to form the groove through a machining after curing as proposed in Japanese Utility Model publication No. 3-68428.

In the conventional FRP formed product with the groove, since the machining is performed after curing the FRP formed product, the FRP fiber can be cut during machining to encounter a problem of lowering a tensile strength of the FRP formed product.

Accordingly, in view of the problem set forth above, it is an object of the present invention to provide a process and an apparatus for forming a FRP formed product with a spiral groove, in which FRP fiber will never been cut during forming of the FRP formed product with the spiral groove, thus can eliminate lowering of the tensile strength of the FRP formed product with the spiral groove, and can enhance the quality thereof.

## DISCLOSURE OF THE INVENTION

According to the first aspect of the invention, a process for forming a FRP formed product with spiral grooves, in a continuous pultrusion process of the FRP formed product, the process for forming intersecting spiral grooves on the FRP formed product comprises the steps of:

winding strip bodies on the outer circumference of the FRP formed product before curing;

depressing the portion of the strip bodies wound around toward the center of the FRP formed product; and

removing the strip bodies from the FRP formed product after curing.

Also, according to the second aspect of the invention, an apparatus for forming a FRP formed product with spiral grooves, comprises, in the forming apparatus of the FRP formed product:

winding device portion for winding strip bodies on the outer periphery of the FRP formed product before curing in intersecting manner;

molding station for depressing the strip bodies wound on the FRP formed produce toward center of the FRP formed product and heating the FRP formed product for curing;

unwinding device portion for removing the strip bodies from the FRP formed product after curing; and control portion for controlling the winding device portion and the unwinding device portion.

With the first and second aspects set forth above, in the process and apparatus for continuous pultrusion of the FRP formed product, by winding the strip bodies on the outer periphery of the FRP formed product before curing in intersecting spiral fashion, depressing the wound portion of the strip bodies toward the center of the FRP formed product, and removing the strip bodies from the FRP formed body after curing, the grooves can be formed without cutting the FRP fiber during forming of the FRP formed product with the spiral grooves to prevent lowering of the tensile strength of the FRP formed product and to improve the quality.

Furthermore, according to the present invention, in the forming process of the FRP formed product with the spiral grooves, the machining process can be eliminated to reduce the process steps in comparison with that in the prior art.

Also, according to the present invention, in application as a reinforcement for the concrete construction, the FRP formed product with the spiral grooves exhibits excellent corrosion resistance with maintaining adhering force with the concrete comparable with the conventional iron reinforcement to improve durability of the concrete construction.

The above-mentioned and other objects, aspects and advantages will become clear to those skilled in the art by the preferred and practical embodiment consistent with the principle of the invention, which will be discussed and illustrated in connection with the accompanying drawings.

## BRIEF DESCRIPTION OF THE DRAWINGS

**Fig. 1** is an explanatory illustration of an apparatus for forming a FRP formed product with a spiral groove, according to the present invention;

**Fig. 2** is an explanatory illustration showing a groove forming station in **Fig. 1**; and

**Fig. 3** is an explanatory illustration showing an adhesion test between a FRP formed product formed by the apparatus of the invention and a concrete.

## BEST MODE FOR IMPLEMENTING THE INVENTION

The present invention will be discussed in detail hereinafter with reference to the accompanying drawings.

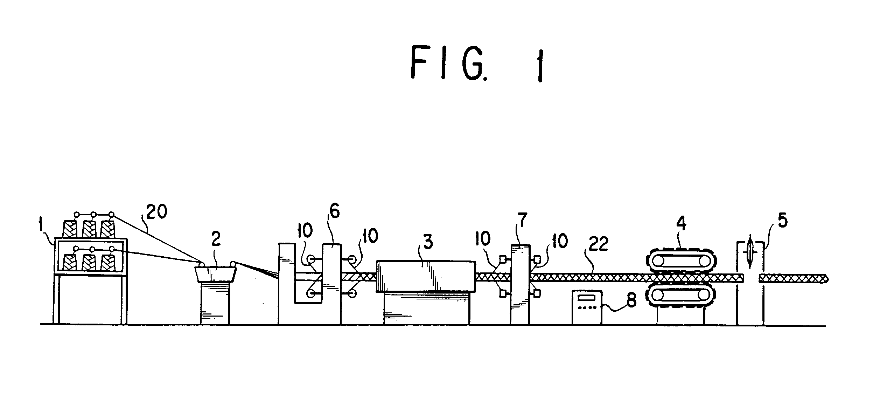

As shown in **Fig. 1**, the present invention is constructed in a pultrusion process of the FRP formed product, constituted of the steps for withdrawing a glass fiber base material **20** from a fiber supply station **1**, impregnating a resin to the withdrawn glass fiber base material **20** by a resin impregnating device station **2**, curing by heating at a mold station, after curing, withdrawing the formed product by a withdrawing device **4, and cutting into a desired dimension by a cutting device station 5**, strip bodies **10** are wound around the outer periphery of the FRP formed product before curing, i.e. the glass fiber base matrix in an intersecting fashion and impressed toward the center of the FRP formed body, and is removed from the FRP formed product after cutting so that the intersecting spiral groove is formed in the FRP formed product.

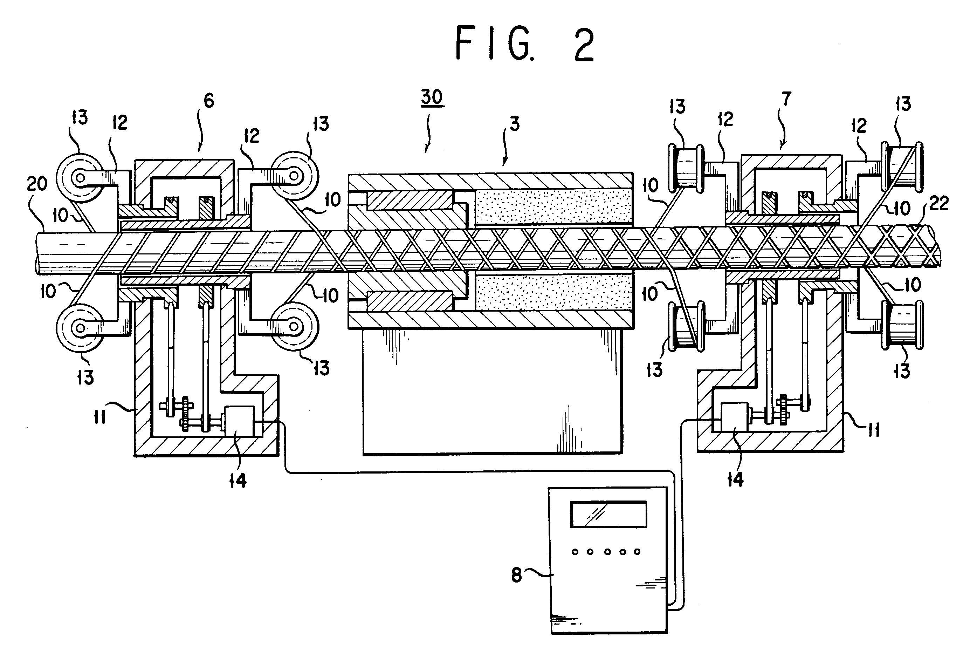

Here, one embodiment of a groove forming station **30** for the FRP formed product will be concretely discussed with reference to **Fig. 2**.

The groove forming station **30** generally comprises a winding device portion **6** provided in the former process to the molding station **3** for winding the strip body **10** on the FRP formed product before curing, i.e. the glass fiber base matrix, a unwinding device portion **7** provided in the latter process of the molding station **3** to unwind the strip body **10** from the FRP formed product **22**, and a control portion **8** for controlling the winding device portion and the unwinding portion.

The winding device portion **6** includes a frame member **11**, a rotary bodies **12** rotatably supported on the frame member **11** and rotatable about the glass fiber base matrix **20**, bobbins **13** rotatably mounted on the rotary bodies **12**, and a motor **14** for rotatingly driving the rotary bodies **12**. The rotary bodies **12** are provided at front and back sides of the frame member **11**. Two rotary bodies **12** at both sides are provided mutually opposite rotating directions. In each of rotary bodies **12**, two bobbins **13** are rotatably mounted at a symmetric positions with respect to a rotary shaft. Although a single motor **14** is employed, it is designed to drive two rotary bodies **12** in mutually opposite directions through gear train. It should be noted that the strip bodies **10** are wound on the bobbin **13**.

The unwinding device portion **7** includes a frame member **11**, a rotary bodies **12** rotatably supported on the frame member **11** and rotatable about the FRP formed product **22**, bobbins **13** secured on the rotary bodies **12**, and a motor **14** for rotatingly driving the rotary bodies **12**. Similarly to the winding device portion **6**, two rotary bodies **12** are provided at front and back sides of the frame member **11**. Two rotary bodies **12** at both sides are provided mutually opposite rotating directions. In each of rotary bodies **12**, two bobbins **13** are secured at a symmetric positions with respect to a rotary shaft. Although a single motor **14** is employed, it is designed to drive two rotary bodies **12** in mutually opposite directions through gear train. It should be noted that the strip bodies **10** are wound on the bobbin **13**.

Furthermore, in the vicinity of the winding device portion **6** and the unwinding device portion **7**, the control portion **8** is provided. The control portion **8** is connected to the winding device portion **6** and the unwinding device portion **7** so that a control for adjusting a pitch of spiral grooves can be performed by varying rotation speeds in relation of a feeding speed of the FRP formed product **22**.

With the construction set forth above, the glass fiber base matrix, in which the resin is impregnated, is wound therearound with the strip body **10** wound on the bobbins **13** on one of the rotary bodies **12** rotating about the glass fiber base matrix at the front side of the winding device portion **6** and is wound therearound the strip body wound on the bobbins **13** on the other rotary body **12** rotating in the opposite direction to the former so that the strip bodies **10** are wound on the surface of the glass fiber base matrix **20**. As the strip body **10**, a rope form synthetic resin is employed. Any desired cross sectional configuration of the groove can be attained by varying the cross sectional configuration of the strip body **10**. Subsequently, the glass fiber base matrix **20** is fed into the molding station **3**, in which the strip bodies **10** are depressed into the surface of the glass fiber base matrix **20** and the glass fiber base matrix is heated for curing to be formed into the FRP formed product with the spiral grooves. Furthermore, in the unwinding device portion **7** as later process of the molding station **3**, the bobbins **13** on one of the rotary bodies **12** at the front side of the unwinding device portion **7** are rotated to unwind the strip bodies **10** from the FRP formed product **22**. Also, the bobbins **13** on the other rotary body **12** at the back side of the unwinding device portion **7** are rotated to unwind the remaining strip bodies **10** from the FRP formed product **22**. Therefore, the FRP formed product with the intersecting spiral grooves can be formed.

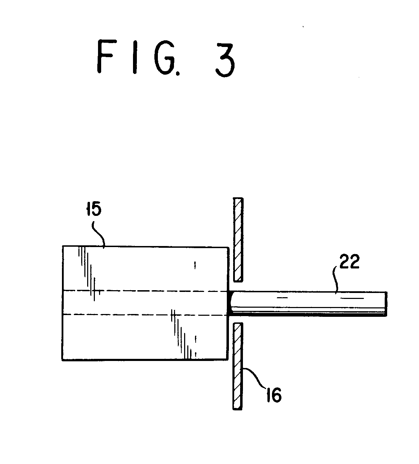

Next, results of adhesion test of the FRP formed product with the spiral grooves of the present invention when the FRP formed product and so forth are employed as reinforcements for the concrete construction will be discussed. Employing the FRP formed product with the intersecting spiral groove, a FRP formed product with a single spiral groove, a FRP formed product without groove, and an iron reinforcement, a fast-setting cement **15** is secured on respective one ends, as shown in **Fig. 3**. After curing, with abutting the fast-setting cement **15** onto an abutting plate **16**, the other end is pulled to measure the adhering force. The results are shown in the following table 1.

TABLE 1

| Form | Adhering Force (Kgf/cm) |
|---|---|
| Intersecting Groove | 65 |
| Single Groove | 35 |
| Without Groove | 27 |
| Iron Reinforcement | 68 |
| Pulling speed: 5 mm/min | |

As shown in the table 1, it has been confirmed that the FRP formed product with the intersecting grooves holds substantially the same adhering force to the iron reinforcement.

**INDUSTRIAL APPLICABILITY**

As set forth above, the process and apparatus for forming the FRP formed product with the spiral grooves can achieve practically important advantages that can produce with lesser process steps, the FRP formed product with the spiral grooves which has a sufficiently high tensile strength, holds equivalent adhering force with the concrete to the conventional iron reinforcement when it is applied as a reinforcement for the concrete construction, and has excellent corrosion resistance.

**Claims**

1. A process for forming a FRP formed product with spiral grooves, in a continuous pultrusion process of the FRP formed product, the process for forming intersecting spiral grooves on the FRP formed product comprising the steps of:
   winding strip bodies (10) on the outer circumference of the FRP formed product before curing;
   depressing the portion of the strip bodies (10) wound around toward the center of the FRP formed product; and
   removing said strip bodies (10) from the FRP formed product after curing.

2. An apparatus for forming a FRP formed product with spiral grooves, comprising, in the forming apparatus of the FRP formed product:
   winding device portion (6) for winding strip bodies (10) on the outer periphery of the FRP formed product before curing in intersecting manner;
   molding station for depressing the strip bodies (10) wound on the FRP formed produce toward center of said FRP formed product and heating said FRP formed product for curing;

unwinding device portion (7) for removing said strip bodies (10) from said FRP formed product after curing; and

control portion (8) for controlling said winding device portion (6) and said unwinding device portion.

FIG. 1

# FIG. 2

# FIG. 3

# INTERNATIONAL SEARCH REPORT

International Application No PCT/JP92/01270

**I. CLASSIFICATION OF SUBJECT MATTER** (if several classification symbols apply, indicate all) 6

According to International Patent Classification (IPC) or to both National Classification and IPC

Int. Cl$^5$  B29C67/14, E04C5/07, E04C5/12, B29K105:10

**II. FIELDS SEARCHED**

| Minimum Documentation Searched 7 | |
|---|---|
| **Classification System** | **Classification Symbols** |
| IPC | B29C67/14, B29B15/08, E04C5/07, E04C5/12, B29K105:10 |

Documentation Searched other than Minimum Documentation
to the Extent that such Documents are Included in the Fields Searched 8

Jitsuyo Shinan Koho          1972 - 1991

**III. DOCUMENTS CONSIDERED TO BE RELEVANT** 9

| Category* | Citation of Document, 11 with indication, where appropriate, of the relevant passages 12 | Relevant to Claim No. 13 |
|---|---|---|
| X | JP, B2, 57-18484 (Central Glass Co., Ltd.), April 16, 1982 (16. 04. 82), Pages 1 to 4, Fig. 1 (Family: none) | 1-2 |
| Y | JP, A, 3-202539 (Kumagai Gumi Co., Ltd.), September 4, 1991 (04. 09. 91), Pages 1 to 3, Figs. 1 to 7 (Family: none) | 1-2 |
| Y | JP, U, 3-68428 (Farisutan Commercial K.K.), July 5, 1991 (05. 07. 91), Pages 1 to 2 (Family: none) | 1-2 |

* Special categories of cited documents: 10

"A" document defining the general state of the art which is not considered to be of particular relevance

"E" earlier document but published on or after the international filing date

"L" document which may throw doubts on priority claim(s) or which is cited to establish the publication date of another citation or other special reason (as specified)

"O" document referring to an oral disclosure, use, exhibition or other means

"P" document published prior to the international filing date but later than the priority date claimed

"T" later document published after the international filing date or priority date and not in conflict with the application but cited to understand the principle or theory underlying the invention

"X" document of particular relevance; the claimed invention cannot be considered novel or cannot be considered to involve an inventive step

"Y" document of particular relevance; the claimed invention cannot be considered to involve an inventive step when the document is combined with one or more other such documents, such combination being obvious to a person skilled in the art

"&" document member of the same patent family

**IV. CERTIFICATION**

| Date of the Actual Completion of the International Search | Date of Mailing of this International Search Report |
|---|---|
| November 20, 1992 (20. 11. 92) | December 1, 1992 (01. 12. 92) |
| International Searching Authority | Signature of Authorized Officer |
| Japanese Patent Office | |

Form PCT/ISA/210 (second sheet) (January 1985)